# EUROPÄISCHE PATENTSCHRIFT

(11) **EP 0 391 290 B1**
(45) Veröffentlichungstag und Bekanntmachung des Hinweises auf die Patenterteilung: **02.06.1993**
(21) Anmeldenummer: 90106233.1
(22) Anmeldetag: 31.03.1990
(51) Int. Cl.: B66F 9/075

(54) **Gabelstapler**
Fork lift truck
Chariot élévateur à fourches

(30) Priorität: 04.04.1989 DE 3910884
(43) Veröffentlichungstag der Anmeldung: 10.10.1990
(73) Patentinhaber: STILL GMBH, D-22113 Hamburg (DE)
(72) Erfinder: Evert, Rainer, Dipl.-Ing., D-2071 Siek (DE)
(74) Vertreter: Schaefer, Gerhard, Dr.

(56) Entgegenhaltungen:
- DE-B- 1 060 322
- FR-A- 505 247
- FR-A- 1 441 956
- FR-A- 2 106 807
- FR-A- 2 131 643
- US-A- 2 299 445
- US-A- 4 100 988
- US-A- 4 162 713
- US-A- 4 330 045

## Beschreibung

Die Erfindung betrifft einen Gabelstapler mit einem aus zwei Rahmenlängsholmen und front- und heckseitigen Querverbindungen bestehenden Fahrzeugrahmen, wobei die frontseitige Querverbindung von einem bodennahen Untergurt und einer dazu vertikal beabstandeten Druckstrebe gebildet wird, zwischen denen die Radantriebseinheiten angeordnet sind.

Aus der DE-OS 32 15 830 ist ein Gabelstapler bekannt, bei dem jede Radantriebseinheit aus einem Fahrmotor mit einem angeflanschten Getriebegehäuse und einer daran gelagerten Radnabe besteht. Auf der gegenüberliegenden Seite des Fahrmotors ist eine Bremse angeordnet. Die beiden Fahrmotoren sind auf einer gemeinsamen Mittelachse zueinander angeordnet und erstrecken sich beide in Richtung zur Fahrzeugmitte. Die genannte DE-OS lehrt, die beiden Fahrmotoren mittelbar oder unmittelbar unlösbar biegesteif miteinander zu verbinden, wodurch dieses Aggregat eine tragende Einheit des Fahrzeugrahmens wird. Der Hubmast dieses vorbekannten Gabelstaplers ist an den Getriebegehäusen befestigt. An dem Aufbau und der Anordnung der Radantriebseinheiten erweist es sich als nachteilig, daß die Getriebegehäuse tragende Bauteile sind, so daß zur Reparatur der darin angeordneten Vorgelegegetriebe der Hubmast abgebaut werden muß, wenn es zur Repartur erforderlich ist, das gesamte Gehäuse zu entfernen. Ebenso ist es nachteilig, daß die beiden Fahrmotoren unlösbar miteinander verbunden sind, so daß bei einem Defekt des einen Motors beide Motoren ausgebaut werden müssen.

Aus der FR-A-505 247 ist eine Fahrzeugachse eines Elektrokarrens bekannt, bei der jedem Rad eine eigene Radantriebseinheit zugeordnet ist. Dies ist deshalb erforderlich, weil die Räder lenkbar sind. Jede Radantriebseinheit besteht aus einem Fahrmotor und einem nachgeordneten Getriebe. Am Getriebegehäusedeckel ist ein Achszapfen angeformt, auf dem das Rad drehbar gelagert ist. Das Getriebegehäuse ist um einen Vertikalzapfen am Fahrzeugrahmen schwenkbar.

Die US-A-4 100 988 beschreibt einen gattungsgemäßen Gabelstapler. Hierbei sind der bodennahe Untergurt und die Druckstrebe unlösbar mit den Rahmenlängsholmen verbunden. Für beide Räder ist ein gemeinsamer Antrieb über ein Differential vorgesehen. Der Hubmast ist in Laschen gelagert, die am bodennahmen Untergurt befestigt sind. Innerhalb der Radfelgen sind Bremsen angeordnet, so daß zu Wartungszwecken die Räder entfernt werden müssen. Falls das Differential ausgebaut werden muß, sind auch die Räder und das jedem Rad zugeordnete Getriebegehäuse zu entfernen.

In der DE-B-1 060 322 ist ein Gabelstapler gezeigt, bei dem die vordere Querverbindung der Rahmenlängshälften von einem Gehäuse gebildet wird, in dem die Achsen und der Antrieb der Räder untergebracht sind. Der Antrieb der Räder erfolgt über einen gemeinsamen Motor und ein Differential. Diese Konstruktion weist zwar eine große Stabilität auf, allerdings sind zu Reparaturarbeiten am Antrieb der an seitlichen Wangen gelagerte Hubmast zu demontieren und das Gehäuse auszubauen.

Der vorliegenden Erfindung liegt die Aufgabe zugrunde, einen Gabelstapler der genannten Gattung zu schaffen, dessen Radantriebseinheiten einfach aufgebaut und leicht zugänglich sind.

Diese Aufgabe wird erfindungsgemäß dadurch gelöst, daß zwei von einander getrennte Radantriebseinheiten vorgesehen sind, die jeweils aus einem Fahrmotor mit radseitig befestigtem, die Radfelge tragenden Getriebe und einer radfern angeordneten Scheibenbremse bestehen, wobei zwischen dem Getriebe und dem Fahrmotor ein Ringflansch vorgesehen ist, der das Hubgerüst trägt und mittels gemeinsamer Schraubverbindungen sowohl zum Rahmenlängsholm als auch zum bodennahen Untergurt und zur Druckstrebe am Fahrzeugrahmen befestigt ist.

Es ist daher möglich, ohne Abbau des Hubgerüstes, sowohl den Fahrmotor als auch das Getriebe zu entfernen. Der Ringflansch ist ein tragendes Rahmenteil, in den die Radkräfte eingeleitet werden. Um den Hebelarm, an dem die Radkraft eingreift, kurz zu halten, erweist es sich als vorteilhaft, das Getriebe als planetengetriebe auszubilden. Als Fahrmotoren kommen sowohl Elektromotoren als auch hydrostatische Motoren in Betracht. Durch die Verwendung von zwei voneinander getrennten Radantriebseinheiten können Fertigungstoleranzen des Rahmens leichter ausgeglichen werden. Wenn z.B. bei einem Fahrzeug gemäß der DE-OS 32 15 830 die Befestigungsstellen der beiden Getriebegehäuse nicht exakt höhengleich angeordnet sind, kommt es zu Verspannungen der gesamten Radantriebseinheit. Der Ringflansch kann auch als Lagerschild eines Elektromotors ausgebildet, also ein Teil von diesem sein.

Die Anordnung bestehend aus bodennahmen Untergurt, Druckstrebe und Ringflanschen stellt ein sehr leichtes und stabiles vorderachsenähnliches Gebilde dar, das die im Betrieb auftretenden Radkräfte gut aufnehmen kann. Hingegen sind die Fahrmotoren weitgehend vor diesen Einflüssen geschützt.

Die Erfindung soll anhand der nachstehenden schematischen Figuren in einem Ausführungsbeispiel näher erläutert werden.

Es zeigen:

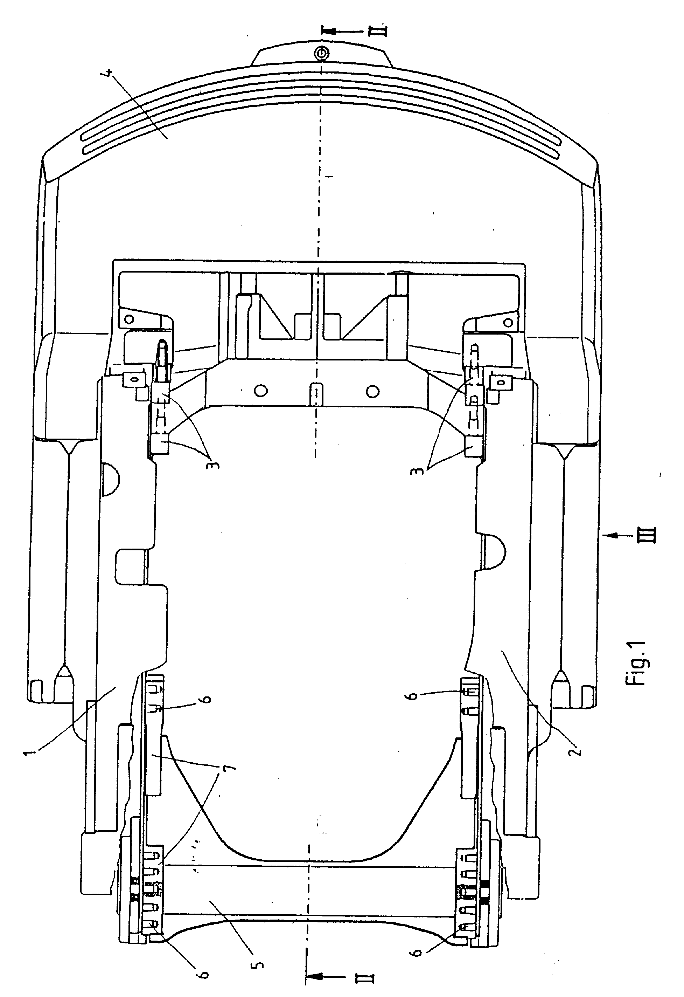

- Figur 1: eine Draufsicht auf einen Fahrzeugrahmen eines Gabelstaplers
- Figur 2: einen Rahmenlängsschnitt gemäß Linie II-II in Figur 1
- Figur 3: eine Seitenansicht eines Rahmenlängsholmes gemäß Pfeil III in Figur 1
- Figur 4: eine Draufsicht auf den Rahmenlängsholm gemäß Figur 3
- Figur 5: eine Heckansicht des Rahmenlängsholmes gemäß Pfeil V in Figur 3
- Figur 6: eine Heckansicht des Rahmenlängsholmes gemäß Figur 5 mit eingebautem Kunststoffinnentank
- Figur 7: einen Rahmenquerschnitt gemäß Linie VII-VII in Figur 2 mit eingebauter Radantriebseinheit unter Verzicht auf eine Darstellung des Untergurtes
- Figur 8: eine Draufsicht auf die Radantriebseinheit gemäß Pfeil VIII in Figur 7

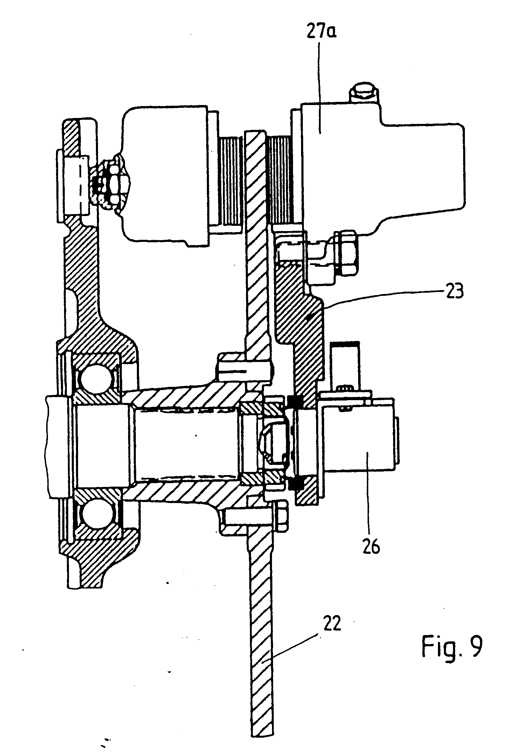

- Figur 9: einen Teilschnitt durch die Bremsanlage gemäß Linie IX-IX in Figur 8.

Der Fahrzeugrahmen besteht aus zwei Rahmenlängsholmen 1 und 2, die heckseitig durch Schraubverbindungen 3 mit einem Gegengewicht 4 verbunden sind. Das Gegengewicht 4 bildet einen Querträger und somit einen tragenden Teil des Fahrzeugrahmens. Am frontseitigen Ende des Fahrzeugrahmens ist eine Querverbindung durch einen Untergurt 5 vorgesehen. Dieser ist durch Schraubverbindungen 6 mit den Rahmenlängsholmen 1 und 2 flächig verbunden.

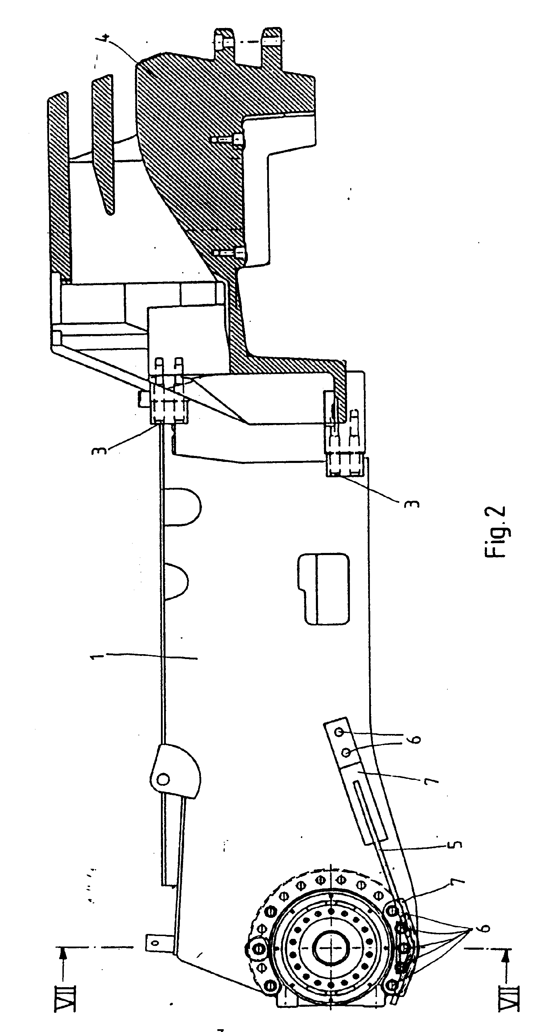

Die Konstruktion des Untergurtes 5 ist in der Zusammenschau mit Figur 2 ersichtlich. Der Untergurt 5 besteht aus einem in Fahrzeuglängsrichtung U-förmigen Blech, wobei die Öffnung zur Heckseite gerichtet ist und die Schenkelinnenseiten des Blechs sich zu den Fahrzeugaußenseiten hin erwei- tern. In Fahrzeugquerrichtung ist das Blech V-förmig abgewinkelt. Der Anschluß an die Rahmenlängsholme 1 und 2 erfolgt über angeschweißte Bleche 7, die zur Aufnahme der Schraubverbindungen 6 ausgebildet sind. Der Untergurt 5 nimmt die Radkräfte und die asymmetrischen Stoßkräfte auf, die beispielsweise beim Anecken eines der in den Figuren nicht gezeigten Vorderräder oder des ebenfalls nicht dargestellten Hubmastes entstehen.

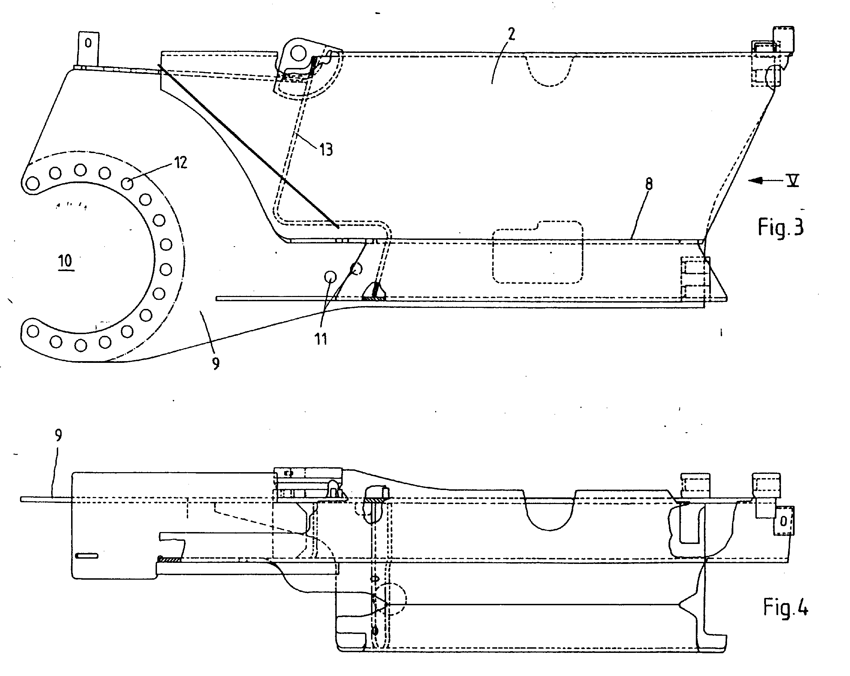

Der Rahmenlängsholm 2 ist in den Figuren 3 und 4 vergrößert dargestellt, wobei Figur 3 die Rahmenaußenseite zeigt. Der Rahmenlängsholm 2 ist im wesentlich identisch zum Rahmenlängsholm 1 aufgebaut. In dem in Figur 3 unteren Bereich des Rahmenlängsholmes 2 ist eine Trittstufe 8 vorgesehen, die das Besteigen des Fahrzeuges erleichtert. Der Mittel- und Heckbereich des Rahmenlängsholmes 2 ist stabiler ausgeführt als der Frontbereich. Im Frontbereich ist ein Blechlappen 9 vorgesehen, der eine kreisförmige Ausnehmung 10 zur Aufnahme einer Radantriebseinheit aufweist. Der Rahmenlängsholm 2 ist eine Schweißkonstruktion. Da es beim Schweißen in aller Regel zu einem Verzug der miteinander zuverschweißenden Bauteile kommt, ermöglicht die relativ biegeweiche Ausbildung des Frontbereiches eine problemlose Montage des Untergurtes 5, der jedoch nach erfolgtem Einbau für eine hohe Stabilität des Rahmens sorgt. Durch die Verwendung eines Blechlappens 9 steht zudem genug Raum innerhalb des Fahrzeugrahmens für großzügig dimensionierte Radantriebseinheiten zur Verfügung. Im Übergangsbereich zwischen dem Blechlappen 9 und dem Mittelbereich des Rahmenlängsholmes 2 sind bodennahe Bohrungen 11 angeordnet. Die kreisförmige Ausnehmung 10 ist von konzentrischen Bohrungen 12 umgeben. Die in der Figur 3 unteren Bohrungen 12 und die Bohrungen 11 sind für die Schraubverbindungen 6 des Untergurtes mit dem Rahmenlängsholm 2 vorgesehen.

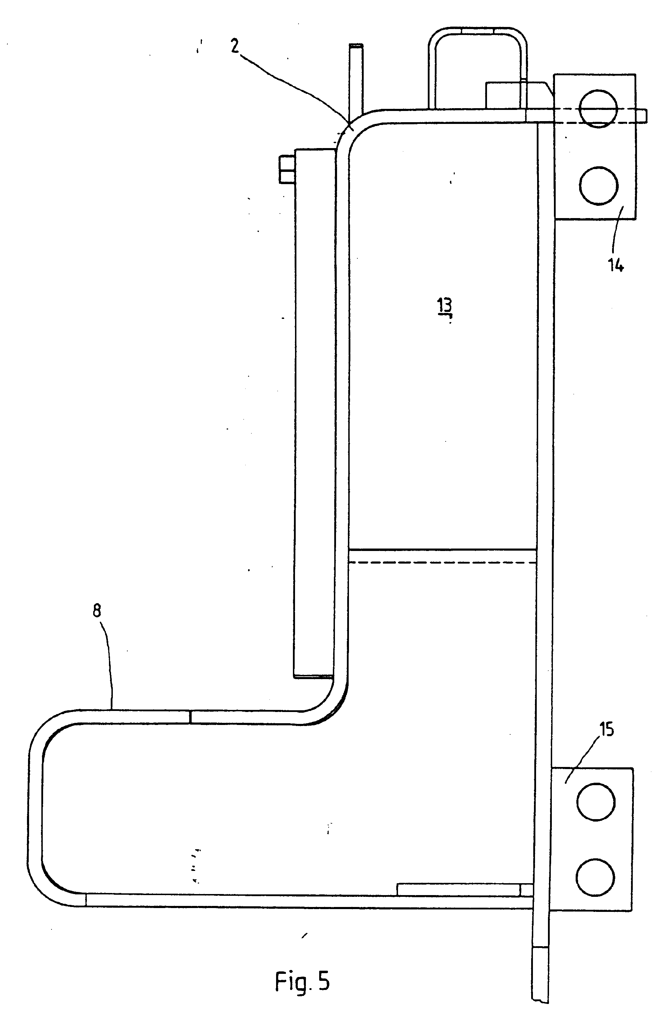

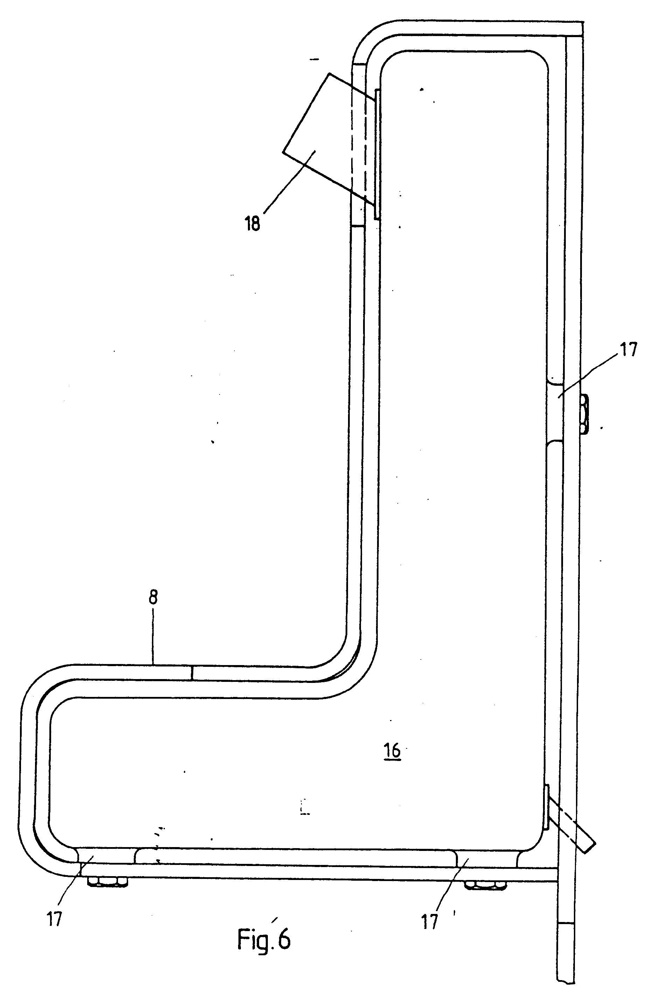

Die Trittstufe 8 bildet zusammen mit dem mittleren und dem heckseitigen Bereich des Rahmenlängsholmes ein Hohlprofil, dessen Struktur aus Figur 5 ersichtlich wird. Die solcherart gebildeten Rahmenlängsholme 1 und 2 sind sehr stabil. Das Hohlprofil ist heckseitig offen und frontseitig durch eine Wand 13 verschlossen. Heckseitige obere und untere Laschen 14 und 15 dienen der Aufnahme der Schraubverbindungen 3 zum Gegengewicht 4. Das Hohlprofil ist zur Aufnahme von Flüssigkeit vorgesehen, dient also als Tank, wobei eine entsprechende Abdichtung vorgesehen sein kann oder in vorteilhafter Weise eine Kunststoffauskleidung, insbesondere ein Kunststoffinnentank 16, wie er in Figur 6 dargestellt ist, vorhanden sein kann. Der heckseitig eingeschobene Kunststoffinnentank 16 verhindert, daß Verschmutzungen, die beim Schweißen des Rahmenlängsholmes entstehen, durch die Nutzung der Hohlräume als Tank in die Flüssigkeit gelangen. Der Kraftstoffinnentank 16 ist der Hohlprofilform angepaßt, was herstellungstechnisch keine Probleme bereitet. Der Hohlraum im Rahmenlängsholm 1 kann beispielsweise der Aufnahme eines Kunststofftanks dienen, während der Hohlraum im Rahmenlängsholm 2 für die Aufnahme eines Hydraulikflüssigkeitstanks vorgesehen sein kann. Der Kunststoffinnentank 16 kann durch Verdickungen 17 mit dem Blech des Rahmenlängsholmes verschraubt sein. Ein Einfüllstutzen 18 wird erst nach der Tankmontage installiert. Der Tank ist in dem stabil ausgebildeten Rahmenlängsholm sicher untergebracht. Die offenen Heckseiten der Hohlräume sind nach der Befestigung des Gegengewichtes 4 verschlossen.

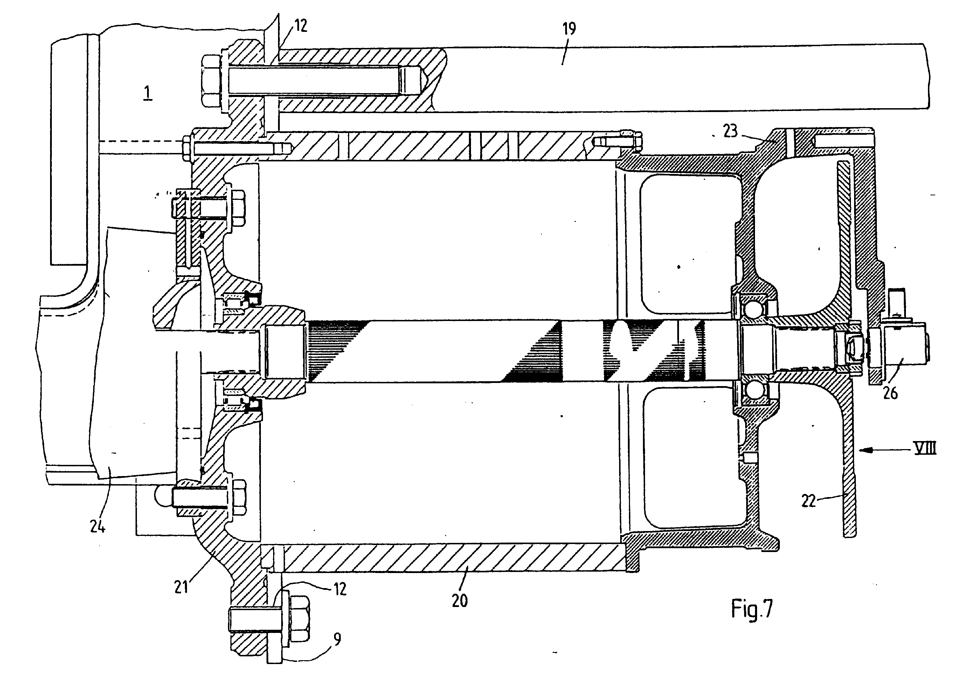

In Figur 7 ist eine Radantriebseinheit dargestellt sowie eine Druckstrebe 19, mit der ebenfalls die beiden Rahmenlängsholme 1 und 2 frontseitig miteinander verbunden sind. Auf eine Darstellung des Untergurtes 5 wurde in dieser Figur der besseren Übersichtlichkeit halber verzichtet. Die Druckstrebe 19 dient der Aufnahme von aus dem Fahrzeuggewicht und den zu transportierenden Lasten resultierenden Druckkräften. Diese entstehen bei Einwirken einer Radkraft. In Folge des Hebelarmes, der zwischen dem Angriffspunkt der Radkraft und dem Blechlappen 9 vorhanden ist, wird ein Drehmoment gebildet, das bestrebt ist, den Blechlappen 9 in Richtung zur Fahrzeuglängsachse zu drücken.

Die Druckstrebe 19 ist vertikal zum Untergurt 5 beabstandet, so daß in dem entstehenden Zwischenraum genügend Platz für die Aufnahme von zwei Radantriebseinheiten bleibt. Dadurch wird zum einen der zur Verfügung stehende Raum optimal ausgenutzt, zum anderen befindet sich der Radantrieb in einem Bereich, der sehr gut zur Aufnahme von Radkräften geeignet ist und sich nur wenig verformt. Für jedes Rad ist eine einzelne Radantriebseinheit vorgesehen. Die Radantriebseinheiten stehen untereinander nicht in mechanischer Verbindung. Die durch die bei der Herstellung des Fahrzeugrahmens auftretenden Toleranzen erzeugten Verspannungen beim Zusammenbau der Rahmenlängsholme werden daher nicht in die Radantriebseinheiten, sondern in den Untergurt 5 und die Druckstrebe 19 verlagert.

Eine Radantriebseinheit besteht aus einem als Elektromotor ausgebildeten Fahrmotor 20, der in Verlängerung der Radachse im Inneren des Rahmens angeordnet und über einen Ringflansch 21 am Blechlappen 9 befestigt ist. Der Einfachheit halber ist in der Figur nur das Gehäuse und die Abtriebswelle des Elektromotors dargestellt. Der Außendurchmesser des Elektromotors entspricht im wesentlichen dem Innendurchmesser der Ausnehmung 10. Die Befestigung des Ringflansches 21 am Blechlappen 9 erfolgt mit Hilfe der Bohrungen 12. Über eine der oberen Bohrungen 12 wird auch die eine Seite der Druckstrebe 19 am Rahmenlängsholm befestigt. Am rahmeninneren Axialende des Fahrmotors 20 ist eine Scheibenbremsanlage, bestehend aus einer Bremsscheibe 22 und einem Bremssattelträger 23, befestigt. Am radnahen Ende des Fahrmotors 20 ist an dem Ringflansch 21 ein als Planetengetriebe ausgebildetes Getriebe 24 befestigt, das die in der Figur nicht dargestellte Radfelge trägt. Auf eine detaillierte Darstellung des Planetengetriebeaufbaues wurde verzichtet.

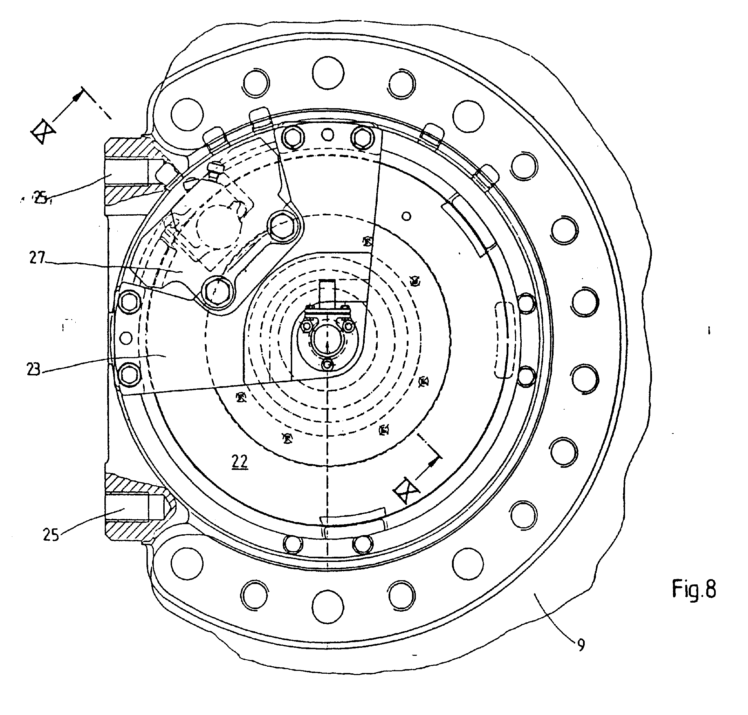

Der Ringflansch 21 bildet in diesem speziellen Beispiel das Lagerschild des Elektromotors. Der Ringflansch 21 ist zur Befestigung des Hubgerüstes des Gabelstaplers vorgesehen, was aus Figur 8 ersichtlich ist, wo die zu diesem Zweck vorhandenen Gewindebohrungen 25 dargestellt sind. Es ist möglich, ohne Demontage des Hubgerüstes sowohl den Elektromotor als auch das Planetengetriebe zu entfernen, weil der Ringflansch 21 im allgemeinen immer am Blechlappen 9 befestigt ist. Nach Abnahme des Hubgerüstes kann aber auch sehr leicht die komplette Radantriebseinheit nach Lösen der Befestigungsschrauben des Ringflansches 21 aus dem Rahmenlängsholm gezogen werden.

Am rahmeninneren Ende der Radantriebseinheit ist ein Drehzahlgeber 26 an dem Bremssattelträger 23 befestigt. Die Schraubverbindungen zwischen dem Ringflansch 21 und dem Blechlappen 9 dienen gleichzeitig der Befestigung der Druckstrebe 19 und des Untergurtes 5. Diese Teile bilden im zusammengebauten Zustand einen äußerst stabilen Frontbereich des Fahrzeugrahmens.

Der Radstand der Vorderachse ist bestimmt von den axialen Abmessungen der Radantriebseinheiten. Der Radstand wiederum ist maßgebend für die Baubreite des Gabelstaplers. Um in enger Umgebung arbeiten zu können, ist es erwünscht, daß Gabelstapler bei hoher Tragkraft und hoher Antriebskraft eine möglichst geringe Baubreite aufweisen. Um einen möglichst geringen Radstand zu erreichen bzw. um bei gegebenem Radstand möglichst große und damit leistungsfähige Radantriebseinheiten unterbringen zu können, hat jede Bremsscheibe 22 einen eigenen Bremssattel 27, wobei die beiden Bremssättel 27 zueinander drehversetzt angeordnet sind.

Beispielsweise ist, wie aus Figur 8 ersichtlich, der auf dem Bremssattelträger 23 befestigte Bremssattel 27 in Fahrtrichtung nach vorne oben geneigt. Der gegenüberliegende, d.h. vor der Zeichenebene befindliche, zu der zweiten nicht gezeigten Radantriebseinheit gehörende Bremssattel kann beispielsweise gegen die Fahrtrichtung nach hinten oben geneigt sein. Dadurch können beide Radantriebseinheiten sehr nahe aneinander gerückt werden und daher entweder ein enger Radstand oder große Elektromotoren realisiert werden. Der verbleibende Abstand beträgt nur wenig mehr als die Breite einer Bremssattelhälte 27a. Dieser Abstand ist auch ausreichend für die Unterbringung des Drehzahlgebers 26. Als Bremssattel 27 kann ein serienmäßiger Bremssattel Verwendung finden, wie er auch im Automobilbau zum Einsatz kommt.

## Patentansprüche

1. Gabelstapler mit einem aus zwei Rahmenlängsholmen (1, 2) und front- und heckseitigen Querverbindungen (4, 5, 19) bestehenden Fahrzeugrahmen, wobei die frontseitige Querverbindung von einem bodennahen Untergurt (5) und einer dazu vertikal beabstandeten Druckstrebe (19) gebildet wird, zwischen denen die Radantriebseinheiten angeordnet sind, dadurch gekennzeichnet, daß zwei voneinander getrennte Radantriebseinheiten vorgesehen sind, die jeweils aus einem Fahrmotor (20) mit radseitig befestigtem, die Radfelge tragenden Getriebe (24) und einer radfern angeordneten Scheibenbremse (22, 23, 27) bestehen, wobei zwischen dem Getriebe (24) und dem Fahrmotor (20) ein Ringflansch (21) vorgesehen ist, der das Hubgerüst trägt und mittels gemeinsamer Schraubverbindungen sowohl zum Rahmenlängsholm (1,2) als auch zum bodennahen Untergurt (5) und zur Druckstrebe (19) am Fahrzeugrahmen befestigt ist.

## Claims

1. A fork lift truck comprising a vehicle chassis composed of two chassis longitudinal members (1, 2) and front- and rear-end transverse links (4, 5, 19), wherein the front-end transverse link is formed by a lower yoke (5) in the vicinity of the ground and a strut (19) vertically spaced therefrom, between which the wheel drive units are arranged, characterised in that two wheel drive units are provided which are separate from one another and which each consist of a propulsion motor (20) with a gear (24) which is attached in the vicinity of the wheel and bears the wheel rim, and a disc brake (22, 23, 27) which is arranged at a distance from the wheel, where an annular flange (21) is disposed between the gear (24) and the propulsion motor (20), which annular flange (21) bears the lift frame and is attached to the vehicle chassis by means of common screw connections both to the chassis longitudinal member (1, 2) and to the lower yoke (5) in the vicinity of the ground and to the strut (19).

## Revendications

1. Chariot élévateur à fourches comportant un châssis fait de deux longerons (1, 2) reliés à l'avant et à l'arrière par des liaisons transversales (4, 5, 19) la liaison avant étant constituée d'une membrure (5) près du sol et surélevée à une certaine distance verticale par une barre de compression (19), les unités motrices entraînant les roues étant placées entre ces deux éléments, caractérisé en ce qu'il est prévu deux unités d'entraînement séparées l'une de l'autre, constituées chacune d'un moteur de marche (20) solidaire, côté roue, d'une boîte de vitesses (24), portant la jante de la roue et d'un frein à disque (22, 23, 27) situé du côté opposé, tandis qu'une bride annulaire (21), intercalée entre le moteur (20) et la boîte de vitesses (24) porte le mât de levage et est fixée par des liaisons communes à vis aussi bien au longeron (1, 2) qu'à l'armature inférieure (5) et qu'à la barre de compression (19).
